# EUROPEAN PATENT APPLICATION

(11) **EP 1 803 981 A2**
(43) Date of publication of application: **04.07.2007**
(21) Application number: 06026935.4
(22) Date of filing: 27.12.2006
(51) Int. Cl.: F16K 11/07, F16K 31/06

(54) **Pressure regulating valve**

(30) Priority: 29.12.2005 US 321513
(71) Applicant: Eaton Corporation, Cleveland, Ohio 44114-2584 (US)
(72) Inventor: Dayton, Robert A., Attica MI 48412 (US); Mattord, Anthony J., Waterford MI 48327 (US); Arnold, William J., Davison MI 48423 (US); Kramer, David J., Rochester Hills MI 48307 (US)
(74) Representative: Rüger, Barthelt & Abel Patentanwälte

(57) **Abstract**

A valve assembly (10) including valve portion including a bore (44), a spool (46) received within the bore (44) and configured for axial movement along the longitudinal axis (A-A) between an open position in which fluid flow through the bore (44) is permitted and a closed position in which fluid flow through the bore (44) is prevented. An impellor (60) is coupled to the spool (46) and configured to rotate the spool (46) about the longitudinal axis (A-A).

## Description

### TECHNICAL FIELD

The present invention generally relates to valves and, in particular, to spool valves.

### BACKGROUND

Automotive transmissions and power steering systems require adequate hydraulic pressure for reliable operation and currently, solenoid valves are the most common way for regulating hydraulic pressure. The solenoid typically includes a solenoid coil with an armature attached to a pressure balanced spool for controlling fluid flow to outlet ports in a bore in which the spool is closely fitted. In such valves, the solenoid current is increased to electromagnetically move the armature and spool to progressively close the flow from the inlet to the outlet ports in the bore.

As the fluid flows from the inlet port into the bore, any contaminants that may be present in the fluid are transferred into the solenoid valve. The contaminants may interfere with the movement of the pressure balanced spool, and thus, cause a disruption or disturbance in the regulation of the fluid flow.

### SUMMARY

The present invention recognizes some of these and other considerations that may be associated with pressure relief valves. In an embodiment, the invention includes a valve assembly comprising valve portion including a bore and a longitudinal axis, a spool received within the bore and configured for axial movement about the longitudinal axis between an open position in which fluid flow through the bore is permitted, and a closed position in which fluid flow through the bore is prevented, a solenoid including an armature configured for axial movement along the longitudinal axis; and a shaft operatively engaging the armature to the spool. The shaft is capable of moving the spool axially along the longitudinal axis and an impellor secured to the spool is configured to rotate the spool about the longitudinal axis.

### BRIEF DESCRIPTION OF THE DRAWINGS

Figure 1 is a cross-sectional view of a pressure regulating valve in an open position according to an embodiment of the invention.
Figure 2 is a cross-sectional view of the pressure regulating valve in a closed position according to an embodiment of the invention.
Figure 3 is a perspective view of an impellor for use within the pressure regulating valve according to an embodiment of the invention.
Figure 4A is a cross-sectional view of the pressure regulating valve taken along line 4A-4A of Figure 1 according to an embodiment of the invention.
Figure 4B is a cross-sectional view of an impellor according to another embodiment of the invention.
Figure 4C is a cross-sectional view of an impellor according to another embodiment of the invention.
Figure 4D is a cross-sectional view of an impellor according to another embodiment of the invention.
Figure 4E is a cross-sectional view of an impellor according to another embodiment of the invention.

### DETAILED DESCRIPTION

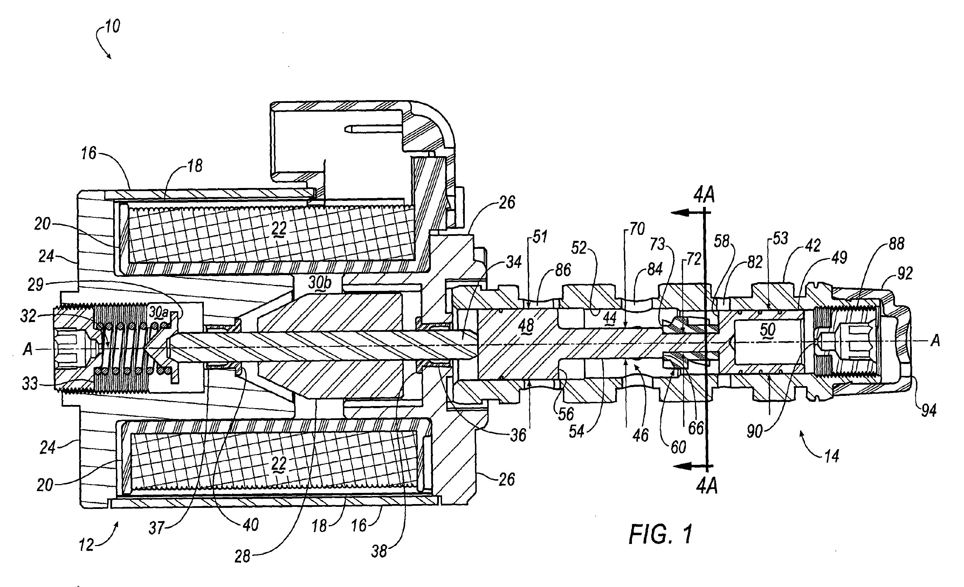

Referring now to the Figure 1, a pressure regulating valve is generally shown at 10. In the illustrated embodiment, pressure regulating valve 10 includes an electrical-magnetic portion, such as solenoid 12, and a hydraulic portion, such as a low-force hydraulic valve 14. As described in detail below, solenoid 12 acts upon hydraulic valve 14 to regulate fluid flow.

Pressure regulating valve 10 may be controlled by an electronic control unit ("ECU") (not shown) mounted in a vehicle (not shown). Pressure regulating valve 10 meters fluid flow to achieve a predetermined fluid pressure within a system of a vehicle. One exemplary embodiment of the invention has been applied to regulating the flow of oil provided to a clutch (not shown) within a transmission (not shown) of the vehicle.

It can be appreciated that solenoid 12 is generally known and comprises a housing 16 surrounding an electrical insulator 18. Within insulator 18 is a bobbin 20 bound by electrically conductive wire 22. Bobbin 20 and electrically conductive wire 22 surround a pole 24 and a flux 26. A cylindrical armature 28 made from magnetically responsive material is provided within a cavity 30b formed between pole 24 and flux 26. A second cavity 30a is formed within pole 24 and includes a spring plate 29. Spring plate 29 is capable of being coupled on one end to a spring 32 and on an opposing end to a shaft 34. Spring 32 may be located within a screw adjust 33. Shaft 34 extends along a longitudinal axis A-A and passes through an aperture 36 in flux 26 to abut hydraulic valve 14 and an aperture 37 in pole 24 to abut armature 28.

An alignment member 40 may be provided between shaft 34 and pole 24 and a second alignment member 38 may be provided between shaft 34 and flux 26. Alignment members 38, 40 may be press fit into apertures 36, 37 and may serve to stabilize shaft 34 along longitudinal axis A-A.

In the illustrated embodiment, housing 16 may be fabricated from any electrically conductive material, including, for example copper and bobbin 20 may be manufactured from any material, including for example, a plastic. Insulator 18 may be fabricated from any electrically non-conductive material. Pole 24 and flux 26 may be fabricated from any metal, such as a corrosion resistant steel, electrically conductive wire 22 may be manufactured from any conductive metal, such as copper. Electrically conductive wire 22 should be electrically insulated such that adjoining windings do not form an electrical path. Alignment members 38, 40 may be manufactured from any number of materials, including for example, stainless steel. It can be appreciated that materials used in the manufacture of solenoid 12 may be selected for compatibility with the varying types of applications in which pressure regulating valve 10 may be utilized, including the particular mechanical, thermal and chemical conditions of the application, and may be selected, for instance, to optimize functional reliability, fluid compatibility, service life and cost.

Solenoid 12 may be energized, to generate an electromagnetic force that acts upon armature 28 urging it against the force of spring 32. If sufficient force is imparted to armature 28 by solenoid 12, armature 12 will move to compress spring 32 (i.e. armature 12 will move leftward). Thereafter, armature 28 may cause shaft 34 and hydraulic valve 14 to also displace, or slide, in an axial direction along axis A-A. The sliding of armature 28, shaft 34 and hydraulic valve 14 along axis A-A may cause the flow of fluid within hydraulic valve 14 to change. The electromagnetic force that acts on armature 28 may be adjusted by controlling an amount of a current passed through solenoid 12 by the ECU. Therefore, the flow of fluid may be regulated by the electromagnetic force and the resulting axial movement of the armature 28, shaft 34 and hydraulic valve 14.

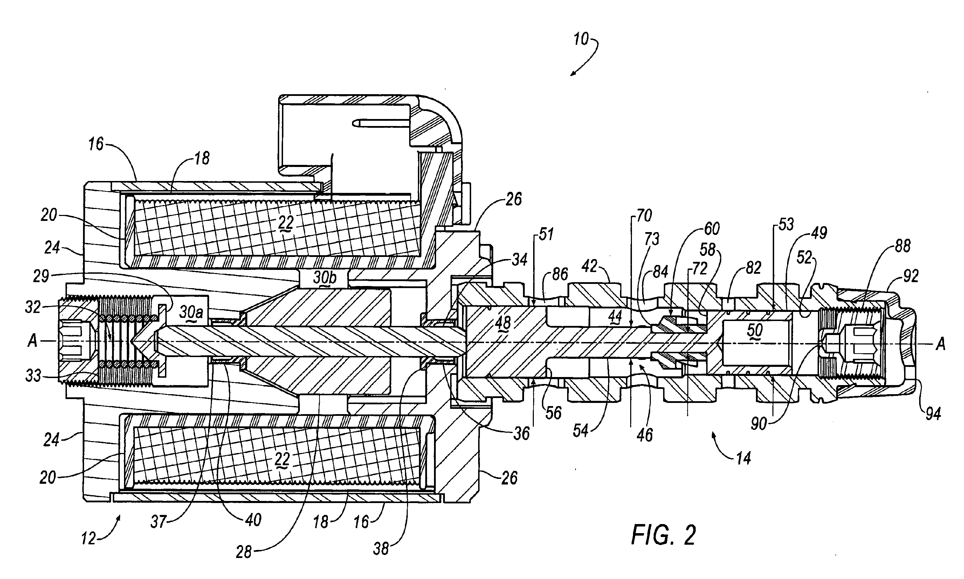

Hydraulic valve 14 includes a valve body 42 having a bore 44. As illustrated, bore 44 may be fabricated such that it transitions between a first, or larger diameter 51 to a second, or smaller diameter 53. A spool 46 is received within the bore 44. Spool 46 may be configured for axial movement along axis A-A, between an open position, as shown in Figure 1, in which fluid flow through the valve body 42 is permitted and a closed position, as shown in Figure 2, in which fluid flow through the valve body 42 is prevented.

In an embodiment, spool 46 is generally cylindrical and may include two opposing ends 48, 49 that are adapted to engage an inner surface 52 of bore 44, with a connecting shaft 54 therebetween. Valve seats 56, 58 are formed where opposing ends 48, 49 join connecting shaft 54, respectively. As illustrated in the Figures 1 and 2, spool 46 is generally shaped like a dumb bell. One opposing end 48 of spool 46 may be solid, or weighted, while the other opposing end 49 may include a cavity 50. However, it can be appreciated that the invention may be practiced with both opposing ends being solid, or hollow. Further, opposing end 48 corresponds in size with diameter 51, while opposing end 49 corresponds in size with diameter 53.

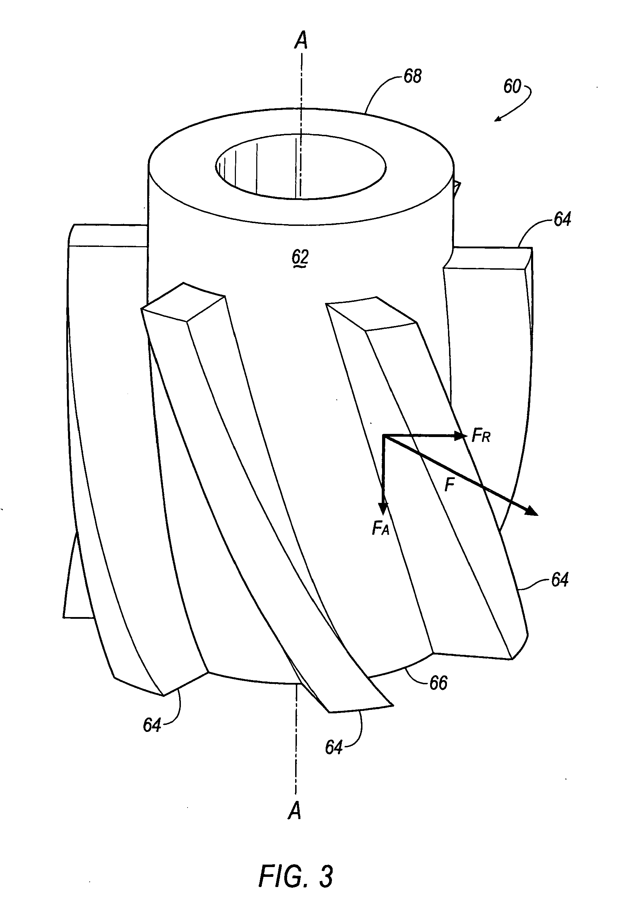

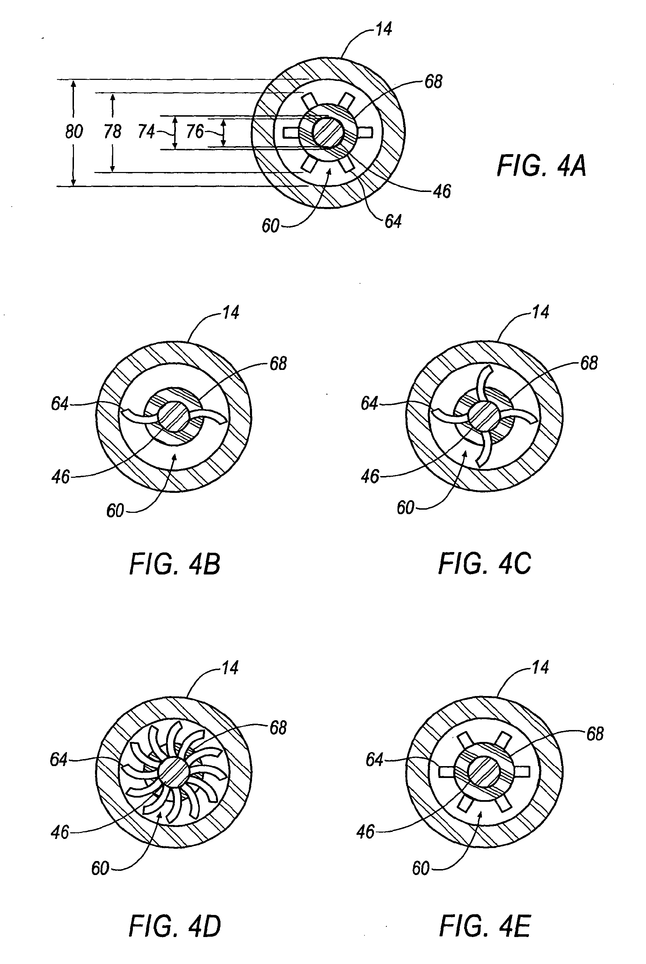

Referring now to Figures 1, 2, 3 and 4A-4E, rotating means, such as, an impellor 60, or a turbine is shown. In an embodiment, impellor 60 is generally a hollow cylinder 62 with a plurality of blades 64, ribs, spokes, or the like, extending outwardly from cylinder 62. As illustrated, blades 64 may curve about the outer circumference of hollow cylinder 62 from a base 66 toward an end 68. Blades 64 may be positioned at uniform intervals. However, it can be appreciated that the invention is not limited by the number, position, or curvature of blades 64. For example, Figures 4B-4E illustrate cross-sectional views of various embodiments of impellor 60. Further, impellor 60 is not limited to being a hollow cylinder 62, and may be shaped in any configuration that imparts a rotational force to spool.

Impellor 60 may be integrally formed from connecting shaft 54 or it may be formed as a separate element which is then secured to connecting shaft 54. In an embodiment, connecting shaft 54 may transition from a first diameter 70 to a second diameter 72 and include a lip 73 where first diameter 70 transitions into second diameter 72. Impellor 60 may be secured to connecting shaft 54 such that base 66 of impellor 60 abuts lip 73 of connecting shaft 54 and end 68 of impellor 60 abuts opposing end 49 of spool 46. Alternatively, impellor may be secured to connecting shaft 54 such that end 68 of impellor 60 abuts lip 73 and base 66 of impellor 60 abuts opposing end 49 of spool 46. In either case, impellor 60 is prevented from sliding along connecting shaft 54 by lip 73.

As illustrated in Figure 4A, an inner diameter 74 of hollow cylinder 62 may be equal or slightly larger than first diameter 76 of connecting shaft 54 so that hollow cylinder 62 may engage connecting shaft 54. An outer diameter 78 of impellor 60, including blades 64, may be smaller than an inner diameter 80 of bore 44 so that impellor 60 does not contact bore 44. It can be appreciated that impellor 60 may be secured to spool 46 by any number of methods, including by welding, a friction fit, adhesives, or the like. In another embodiment, as illustrated in Figure 4E, impellor 60 may be integral to spool 46 such that impellor 60 and spool 46 are manufactured from one unitary piece during, for example, a milling process or the like. Other techniques for fabricating impellor 60 and spool 46 from a unitary piece include forging or using sintered metal technology. In such a case, the connecting shaft may include blades, ribs, spokes or the like extending outwardly from connecting shaft similar to blades 64 of impellor 60. Further, it can be appreciated that the invention is not limited by how impellor 60 is integrated with connecting shaft 54.

Referring to Figures 1 and 2, hydraulic valve 14 further includes a first port 82, such as an inlet or a supply port, which continually allows fluid into bore 44 when hydraulic valve 14 is open. As illustrated in Figure 1, inlet port 82 is partially unobstructed by spool 46, allowing fluid into bore 44. The fluid travels through bore 44 in the downstream direction to a second port 84, such as a control port. The control port 84 provides a constant supply of fluid to an external system, such as the transmission of the vehicle. It can be appreciated that the control port 84 provides fluid to the external system irrespective of whether hydraulic valve 14 is open or closed. When hydraulic valve 14 is closed, as in Figure 2, inlet port 82 is completely obstructed by spool 46, causing the fluid to flow downstream to a third port 86, or an exhaust port. Exhaust port 86 leads to a sump (not shown).

Hydraulic valve 14 may further include a bleed orifice 88 upstream of spool 46. In an embodiment, bleed orifice 88 is secured to valve body 42 by means of threading bleed orifice 88 to valve body 42. However, it can be appreciated that the invention is not limited by how bleed orifice 88 is secured to valve body 42. Bleed orifice includes an aperture 90 that allows access fluid to bleed, or discharge, out of bore 44 when hydraulic valve 14 moves from a closed to an open position, and vice versa. Hydraulic valve 14 may also include a reservoir cap 92 that encloses bleed orifice 88. Similar to bleed orifice 88, reservoir cap 92 may include a bleed hole 94 for allowing excess fluid to escape from hydraulic valve 14.

As fluid enters bore 44 through inlet port 82, the fluid exerts a force F on individual blades 64 of impellor 60. Force F may be divided into a radial component FR (i.e., the component of the reaction force F acting in the radial direction of blade 64) and an axial component FA (i.e., the component of the force F acting in the axial direction of blade 64). The radial component FR acts on blade 64, which is located at a spaced relationship from axis A-A. In other words, radial component FR acts to rotate impellor 60 about axis A-A. As a result, impellor 60 and spool 46 to rotate about axis A-A. Small particle contamination in the fluid can cause spool 46 to stick resulting in poor pressure control. By rotating spool 46, contamination is cleared from the radial clearance between spool 46 and bore 44 thereby enabling accurate pressure control.

During normal operation of pressure regulating valve 10, hydraulic valve 14 is in the open position and is moved to the closed position when solenoid 12 energizes. If desired, pressure regulating valve 10 can be configured for use as a standard in-line device that regulates pressure conditions at inlet port and closes virtually instantaneously to prevent an over-pressure condition and any impulse pressure spikes from entering control port or exiting exhaust port. When so configured, hydraulic valve 14 may include a threaded male connector (not shown) on its downstream end and a threaded female connector (not shown) on its upstream end, or any combination of industry standard connectors. Alternatively, pressure regulating valve 10 may be configured as a coupling or an adapter configured to mate with a threaded or quick-connect/disconnect style fitting. Furthermore, pressure regulating valve 10 is not limited to a specific size and can cover a wide range of both conventional and unconventional sizes.

Having described various embodiments of the invention, it will be understood that various modifications or additions may be made to the embodiments chosen here to illustrate the present invention, without departing from the spirit of the present invention. For example, both "hydraulic" and "fluid" have been used to describe the valve disclosed herein. Although the present invention can be used in hydraulic applications, there is nothing that prevents the valve disclosed herein from also being used in pneumatic applications (such as compressed gas) or those applications relating to pressurized steam. Accordingly, it is to be understood that the subject matter sought to be afforded protection hereby shall be deemed to extend to the subject mater defined in the appended claims (including all fair equivalents thereof).

## Claims

1. A valve assembly (10), comprising:
a valve body (42) including a bore (44);
a spool (46) received within the bore (44) and configured for axial movement along a longitudinal axis (A-A) between an open position in which fluid flow through the bore (44) is permitted and a closed position in which fluid flow through the bore (44) is prevented; and
an impellor (60) rotationally coupled to the spool (46) and adapted to rotate, wherein said impellor rotation is caused by the movement of fluid through the valve bore (44), and
wherein said impellor rotation causes said spool (46) to rotate about the longitudinal axis (A-A).

2. The valve assembly (10) of claim 1, further including:
a solenoid (12) including an armature (28), and
a shaft (34) operatively engaging the armature (28) and the spool (46), wherein the shaft (34) is adapted to move the spool (46) along the longitudinal axis (A-A).

3. The valve assembly (10) according to claim 1, wherein the spool (46) further includes two opposing ends (48, 49) and a connecting shaft (54) therebetween, and wherein the impellor (60) is integral to the connecting shaft (54).

4. The valve assembly (10) according to claim 1, wherein the valve body (42) further includes at least one port (82) for entry of fluid into the bore (44) and wherein the impellor is located downstream of the at least one port (82).

5. The valve assembly (10) according to claim 1, wherein the impellor is formed in the shape of a hollow cylinder having at least one blade extending outwardly from a surface of the hollow cylinder.

6. The valve assembly (10) according to claim 5, wherein the at least one blade partially curves about an outer surface of the cylinder.

7. A pressure regulating valve (10), comprising:
a valve body having bore (44) and a longitudinal axis (A-A);
a spool (46) received within the bore (44) including means for moving said spool (46) about the longitudinal axis (A-A) in reaction to fluid flow through the valve bore (44); and
a electro-magnetic solenoid (12) operatively engaged to the valve body (42).

8. The pressure regulating valve (10) according to claim 7, wherein the electro-magnetic solenoid (12) is capable of moving the spool (46) between an open position in which fluid flow through the bore (44) is permitted and a closed position in which fluid flow through the bore (44) is prevented.

9. The pressure regulating valve (10) according to claim 7, wherein the moving means (60) includes a turbine.

10. The pressure regulating valve (10) according to claim 9, wherein the turbine (60) includes a cylinder (62) and at least one blade (64) extending outwardly from the cylinder (62).

11. The pressure regulating valve (10) according to claim 10, wherein the at least one blade (64) partially curves about an outer surface of the cylinder (62).

12. The pressure regulating valve (10) according to claim 7, wherein the valve (10) further includes at least one entry port (82) for accepting fluid into the bore (44) and wherein the moving means (60) is located downstream of the at least one port (82).

13. A valve (10) comprising:
a valve body (42) having a bore (44) extending along a longitudinal axis (A-A) and at least one port (82) for allowing a fluid to enter the bore (44);
a spool (46) received within the bore (44); and
an impellor (60) coupled to the spool (46), wherein the impellor (60) is adapted to rotate the spool (46) about the longitudinal axis (A-A),
wherein the impellor (60) is located downstream of the at least one port (82).

14. The valve (10) according to claim 13, wherein the impellor (60) is located proximate the at least one port (82).

15. The valve (10) according to claim 13, wherein the impellor (60) includes a cylindrical, hollow body (62) having at least one blade (64) extending outwardly from an outer surface of the cylindrical, hollow body (62).

16. The valve (10) according to claim 15, wherein the at least one blade (64) partially curves about the outer surface of the cylindrical, hollow body (62).

17. The valve (10) according to claim 15, wherein the fluid entering through the at least one port (82) exerts a rotational force upon the at least one blade (64) of the impellor (60) causing the impellor (60) and the spool (46) to rotate about the longitudinal axis (A-A).

18. The valve (10) according to claim 13, further including a solenoid (12) having an armature(28) configured for axial movement along the longitudinal axis (A-A) and a shaft (34) operatively engaging the armature (28) to the spool (46), wherein the shaft (34) is adapted to move the spool (46) axially along the longitudinal axis (A-A).

19. The valve (10) according to claim 18, wherein the spool (46) is adapted to move axially between an open position in which fluid entry through the at least one port (82) is permitted and a closed position in which fluid entry through the at least one port (82) is prevented.
